# EUROPEAN PATENT SPECIFICATION

(11) **EP 4 539 521 B1**
(45) Date of publication and mention of the grant of the patent: **22.04.2026**
(21) Application number: 24767978.0
(22) Date of filing: 21.08.2024
(51) Int. Cl.: H04W 12/03, H04W 12/08, H04W 4/80, H04W 4/06

(54) **ELECTRONIC DEVICE, SINK DEVICE, AND CONTROL METHOD THEREOF**
ELEKTRONISCHE VORRICHTUNG, SENKENVORRICHTUNG UND STEUERUNGSVERFAHREN DAFÜR
DISPOSITIF ÉLECTRONIQUE, DISPOSITIF RÉCEPTEUR ET PROCÉDÉ DE COMMANDE ASSOCIÉ

(30) Priority: 01.09.2023 KR 20230116556
(43) Date of publication of application: 16.04.2025
(73) Proprietor: SAMSUNG ELECTRONICS CO., LTD., Yeongtong-gu Suwon-si, Gyeonggi-do 16677 (KR)
(72) Inventor: JEE, Hojeen, Suwon-si, Gyeonggi-do 16677 (KR)
(74) Representative: Appleyard Lees IP LLP
(86) International application number: PCT/KR2024/012449
(87) International publication number: WO 2025/048378

(56) References cited:
- EP-A1- 4 224 889
- KR-A- 20220 097 224
- KR-B1- 102 379 068
- US-A1- 2019 356 485
- US-A1- 2022 159 436
- US-A1- 2022 167 164
- US-A1- 2022 210 557
- US-A1- 2022 256 626

## Description

### [Technical Field]

This disclosure relates to an electronic device, a sink device, and a controlling method thereof, and more particularly, to an electronic device and a sink device that can effectively transmit and receive audio contents while maintaining security, and a controlling method thereof.

### [Background Art]

Recently, as wireless communication technologies and technologies related to the Internet of Things (IoT) have developed, transmitting and receiving various kinds of data among different devices is becoming generalized.

In particular, recently, technologies for effectively transmitting an audio content to a plurality of devices, such as a low energy (LE) audio broadcasting technology supported in a Bluetooth 4.0 version or higher, etc., are gaining attention.

According to an LE audio broadcasting technology, an audio content can be transmitted swiftly at low power from one transmission device to a plurality of reception devices such as smartphones, speakers, wearable devices, beacons, etc. located in specific spaces.

However, according to a conventional technology for LE audio broadcasting, in case the content of an audio content needs to be transmitted only to a user who has authority due to a reason such as security or privacy, it is required that a user directly inputs a password that was shared in advance into each reception device for preventing transmission of the audio content to a user who does not have authority, and this causes inconvenience to the user. US 2022/167164 A1 describes device network configuration and registration method, device and system. US 2022/256626 A1 describes a device control method and terminal. EP 4 224 889 A1 describes a network configuration method and apparatus for intelligent device.

### [Detailed Description of the Invention]

### [Technical Solution]

An embodiment according to this disclosure is for addressing the aforementioned technical problem, and the purpose of the disclosure is in providing an electronic device and a sink device that can effectively transmit and receive audio contents while maintaining security without an input of a password by a user, and a controlling method thereof.

According to one aspect of the present disclosure there is provided an electronic device comprising a communicator, a memory storing an audio content, and a processor configured to broadcast, through the communicator, a first signal including the audio content in an encrypted state, wherein the processor is further configured to control the communicator to transmit a second signal including identification information of the audio content to a sink device, and based on receiving, through the communicator, a third signal corresponding to a user input related to a request for the audio content in response to the second audio signal from the sink device, control the communicator to transmit a fourth signal including information on a password used in the encryption of the audio content to the sink device.

According to an embodiment of the disclosure for achieving the aforementioned purpose, an electronic device includes a communicator, a memory storing an audio content, and a processor broadcasting a first signal including information wherein the audio content has been encrypted through the communicator, wherein the processor may control the communicator to transmit a second signal including identification information on the audio content to a sink device, and based on receiving a third signal corresponding to a user input related to a request of the audio content from the sink device through the communicator, control the communicator to transmit a fourth signal including information on a password used in the encryption to the sink device.

Here, the processor may broadcast the first signal by using a Bluetooth low energy (BLE) audio protocol, and the fourth signal may be transmitted to the sink device based on a communication method different from the BLE audio protocol.

Meanwhile, the processor may receive at least one of first feedback information regarding the strength of the first signal or second feedback information regarding the quality of the first signal from the sink device through the communicator, and adjust the strength of the broadcasted first signal based on at least one of the first feedback information or the second feedback information.

Meanwhile, the processor may control the communicator to transmit a fifth signal for identifying the distance between the electronic device and the sink device to the sink device, and based on receiving third feedback information regarding the strength of the fifth signal from the sink device through the communicator, adjust the strength of the first signal based on the third feedback information.

Meanwhile, the fourth signal may be an ultrasonic signal or an ultra-wideband (UWB) signal.

Meanwhile, the processor may, based on the sink device being connected to an access point (AP) connected with the electronic device, control the communicator to transmit the fourth signal to the sink device, and based on the sink device not being connected to the AP connected with the electronic device, control the communicator to transmit data corresponding to non-provision of the password to the sink device.

Here, the information on the password may be included in the fourth signal in a state of having been encrypted based on a password for the AP.

According to another aspect of the present disclosure there is provided a sink device comprising: a communicator; a display; a memory storing at least one instruction; and a processor configured to receive, through the communicator, a first signal broadcasted by an electronic device and including audio content in an encrypted state, wherein the processor is further configured to: based on receiving, through the communicator, a second signal including identification information of an audio content from the electronic device, control the display to display the identification information of the audio content, based on receiving a user input related to a request for the audio content in response to the displaying of the identification information of the second signal, control the communicator to transmit a third signal corresponding to the user input to the electronic device, and based on receiving, through the communicator, a fourth signal including information on a password from the electronic device, provide the audio content by decrypting the audio content in the encrypted state using the password.

According to an embodiment of the disclosure for achieving the aforementioned purpose, a sink device includes a communicator, a display, a memory storing at least one instruction, and a processor receiving a first signal which is broadcasted by the electronic device and includes information wherein the audio content has been encrypted from the electronic device through the communicator, wherein the processor may, based on receiving a second signal including identification information on an audio content from the electronic device through the communicator, control the display to display the identification information on the audio content, and based on receiving a user input related to a request of the audio content, control the communicator to transmit a third signal corresponding to the user input to the electronic device, and based on receiving a fourth signal including information on a password from the electronic device through the communicator, provide the audio content based on the encrypted information that was decrypted by using the password.

Here, the first signal may be broadcasted by using a Bluetooth low energy (BLE) audio protocol, and the fourth signal may be received from the electronic device based on a communication method different from the BLE audio protocol.

Meanwhile, the processor may control the communicator to transmit at least one of first feedback information regarding the strength of the first signal or second feedback information regarding the quality of the first signal to the electronic device, and receive the first signal of which strength has been adjusted according to at least one of the first feedback information or the second feedback information from the electronic device through the communicator.

Meanwhile, the processor may receive a fifth signal for identifying the distance between the sink device and the electronic device from the electronic device through the communicator, control the communicator to transmit third feedback information regarding the strength of the fifth signal to the electronic device, and receive the first signal of which strength has been adjusted according to the third feedback information.

Meanwhile, the fourth signal may be an ultrasonic signal or an ultra-wideband ( UWB) signal.

Meanwhile, the sink device may be connected to the same network through an access point (AP) connected with the electronic device.

Here, the information on the password may be included in the fourth signal in a state of having been encrypted based on a password for the AP.

Meanwhile, the processor may provide the audio content by controlling the communicator to transmit the decrypted information to an audio output device connected to the sink device.

According to an embodiment of the disclosure for achieving the aforementioned purpose, a method of controlling an electronic device may include steps of broadcasting a first signal including information wherein an audio content has been encrypted, transmitting a second signal including identification information on the audio content to a sink device, receiving a third signal corresponding to a user input related to a request of the audio content from the sink device, and based on receiving the third signal, transmitting a fourth signal including information on a password used in the encryption to the sink device.

According to an embodiment of the disclosure for achieving the aforementioned purpose, a method of controlling a sink device that receives a first signal which is broadcasted by the electronic device and includes information wherein an audio content has been encrypted from the electronic device may include the steps of receiving a second signal including identification information on an audio content from the electronic device, based on receiving the second signal, displaying the identification information on the audio content, and based on receiving a user input related to a request of the audio content, transmitting a third signal corresponding to the user input to the electronic device, receiving a fourth signal including information on a password from the electronic device, and based on receiving the fourth signal, providing the audio content based on the encrypted information that was decrypted by using the password.

According to another embodiment of the disclosure, a non-transitory computer readable recording medium including a program for executing any method of controlling substantially as described herein may be provided.

### [BRIEF DESCRIPTION OF THE DRAWINGS]

The subject-matter of the present disclosure is best understood with reference to the accompanying figures, in which:
FIG. 1 is a diagram schematically illustrating a configuration of a system according to an embodiment of the disclosure;
FIG. 2 is a block diagram schematically illustrating a configuration of an electronic device according to an embodiment of the disclosure;
FIG. 3 is a block diagram illustrating in detail a configuration of an electronic device according to an embodiment of the disclosure;
FIG. 4 is a block diagram schematically illustrating a configuration of a sink device according to an embodiment of the disclosure;
FIG. 5 is a block diagram illustrating in detail a configuration of a sink device according to an embodiment of the disclosure;
FIG. 6 is a diagram for illustrating in detail an embodiment related to adjusting the strength of a first signal;
FIG. 7 is a flow chart illustrating a controlling method of an electronic device according to an embodiment of the disclosure; and
FIG. 8 is a flow chart illustrating a controlling method of a sink device according to an embodiment of the disclosure.

### [Mode for Implementing the Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include various modifications, equivalents, and/or alternatives of the embodiments of the disclosure. Meanwhile, with respect to the detailed description of the drawings, similar components may be designated by similar reference numerals.

Also, in describing the disclosure, in case it is determined that detailed explanation of related known functions or features may unnecessarily lengthen the disclosure, detailed explanations of well-known functions or features will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Further, terms used in the disclosure are used only to explain specific embodiments, and are not intended to limit the scope of the disclosure. In addition, singular expressions include plural expressions, unless defined obviously differently in the context.

Also, in the disclosure, expressions such as "have," "may have," "include," and "may include" denote the existence of such characteristics (e.g.: elements such as numbers, functions, operations, and components), and do not exclude the existence of additional characteristics.

In addition, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B.

Further, the expressions "first," "second," and the like used in the disclosure may describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of' performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Further, in the embodiments of the disclosure, 'a module' or 'a part' may perform at least one function or operation, and may be implemented as hardware or software, or as a combination of hardware and software. Also, a plurality of 'modules' or "parts" may be integrated into at least one module and implemented as at least one processor, excluding 'a module' or 'a part' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

Hereinafter, embodiments according to the disclosure will be described in detail with reference to the accompanying drawings, such that those having ordinary skill in the art to which the disclosure belongs can easily carry out the disclosure.

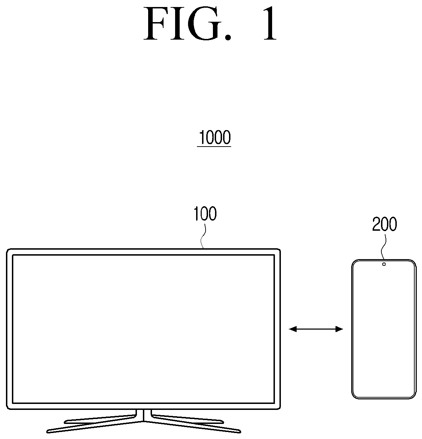

FIG. 1 is a diagram schematically illustrating a configuration of a system 1000 according to an embodiment of the disclosure.

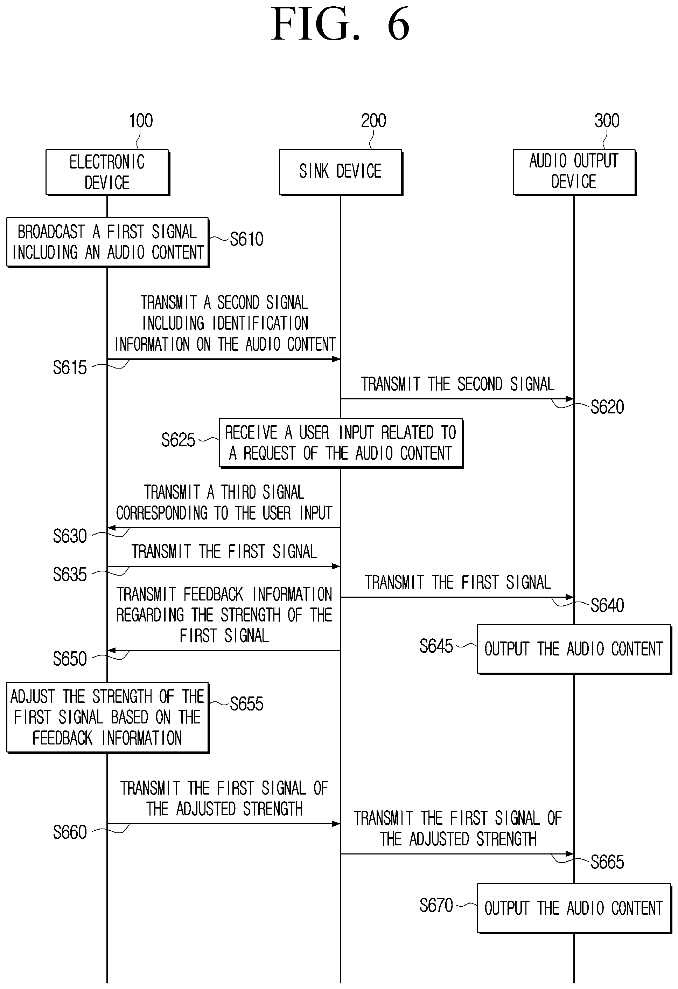

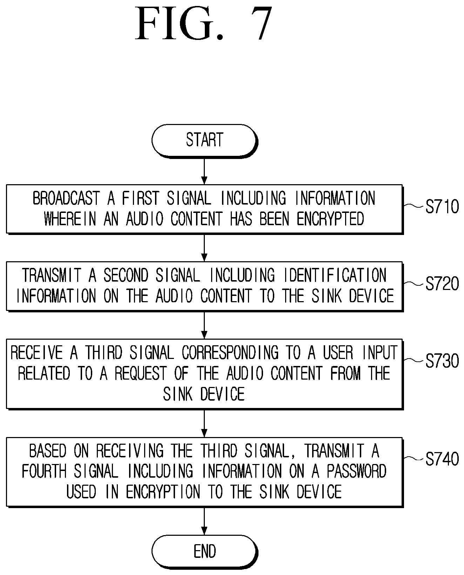

As illustrated in FIG. 1, the system 1000 according to the disclosure may include an electronic device 100 and a sink device 200. As illustrated in FIG. 6 and FIG. 7, the system 1000 may further include an audio output device 300, but hereinafter, the system 1000 consisting of the electronic device 100 and the sink device 200 will be explained first.

'The electronic device 100' refers to a device that can broadcast an audio content. In particular, the electronic device 100 may broadcast a signal for an audio content by using a Bluetooth low energy (BLE) audio protocol. In the description, a signal for an audio content broadcasted by the electronic device 100 will be briefly referred to as 'a first signal.'

For example, the electronic device 100 may be implemented as a TV, but is not limited thereto, and any device that can broadcast an audio content such as a PC, a server, a set-top box (STB), an edge computing device, etc. may fall under the electronic device 100 according to the disclosure regardless of the type.

In case the electronic device 100 is implemented as a device including a display such as a TV, etc., the electronic device 100 may display a video content on the display, and while the video content is displayed on the display, the electronic device 100 may broadcast an audio content corresponding to the video content.

'Broadcasting' means a method of transmitting data (or information, a signal, a content) to all devices within a specific range without storing an address of a specific reception device, and in particular, broadcasting of a signal using the BLE audio protocol may be briefly referred to as 'LE audio broadcasting.' The LE audio broadcasting refers to a method for transmitting data unidirectionally while minimizing delay of a signal at low power by using Bluetooth communication.

The disclosure can be applied not only to a case of transmitting an audio content by using LE audio broadcasting but also to screen mirroring or various communication technologies related to sharing of data/contents. However, hereinafter, various embodiments will be explained on the premise that an audio content is transmitted by using LE audio broadcasting, for the convenience of explanation.

'The sink device 200' refers to a device that can receive an audio content. In particular, the sink device 200 may receive the first signal for an audio content broadcasted by the electronic device 100, and provide the audio content based on the received first signal. The feature of providing an audio content may include providing an audio content as the sink device 200 outputs the audio content, and providing an audio content by transmitting information on the audio content as the audio content such that the audio output device 300 outputs the audio content.

For example, the sink device 200 may include a smartphone, a smart watch, a tablet PC, a speaker, etc., and other than these, any device that can receive an audio content broadcasted by the electronic device 100 may fall under the term 'the sink device 200' according to the disclosure regardless of in which type of device it is implemented.

The electronic device 100 may be replaced by a term such as 'a source device' or 'a transmission device,' etc. in that it is a device for transmitting an audio content, and the sink device 200 may be replaced by a term such as 'a sink device' or 'a reception device' in that it is a device for receiving an audio content. Also, as will be described below, in case the sink device 200 receives an audio content and transmits the audio content to the audio output device 300, the sink device 200 may be referred to as 'an assistant device' or 'a relay device,' etc.

Hereinafter, various embodiments will be disclosed along with explanation regarding the components of the electronic device 100 and the sink device 200.

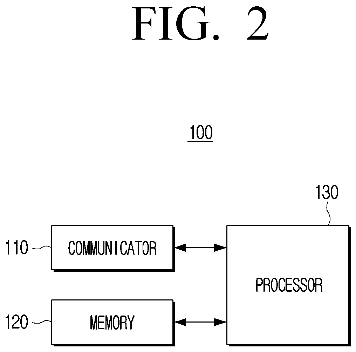

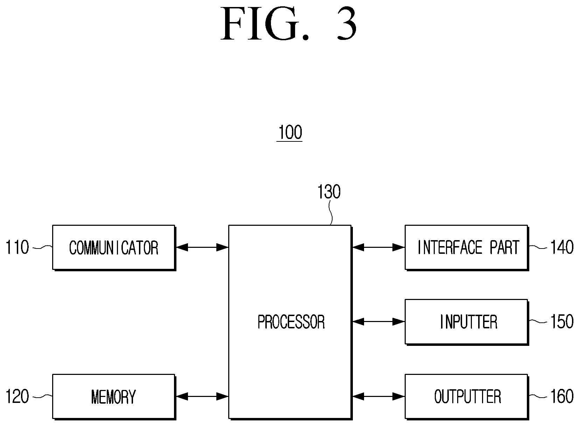

FIG. 2 is a block diagram schematically illustrating a configuration of the electronic device 100 according to an embodiment of the disclosure, and FIG. 3 is a block diagram illustrating in detail a configuration of the electronic device 100 according to an embodiment of the disclosure.

As illustrated in FIG. 2, the electronic device 100 may include a communicator 110, a memory 120, and a processor 130. Also, as illustrated in FIG. 3, the electronic device 100 may further include an interface part 140, an inputter 150, and an outputter 160. However, the components as illustrated in FIG. 2 and FIG. 3 are merely exemplary, and it will be clear to the skilled person that in implementing the disclosure, one or more new components can be added in addition to the components as illustrated in FIG. 2 and FIG. 3, and/or one or more of the components can be omitted.

The communicator 110 includes a circuit, and may perform communication with an external device including the sink device 200. Specifically, the processor 130 may receive various types of data or information from a connected external device through the communicator 110, and/or transmit various types of data or information to the external device.

The communicator 110 may include at least one of a Wi-Fi module, a Bluetooth module, a wireless communication module, an NFC module, or an ultra-wide band (UWB) module. Specifically, a Wi-Fi module and a Bluetooth module may perform communication by a Wi-Fi method and a Bluetooth method, respectively. In the case of using a Wi-Fi module or a Bluetooth module, various types of connection information such as an SSID, etc. is transmitted and received first, and connection of communication is performed by using the information, and various types of information can be transmitted and received thereafter.

Also, a wireless communication module may perform communication according to various communication standards such as IEEE, Zigbee, 3rd Generation (3G), 3rd Generation Partnership Project (3GPP), Long Term Evolution (LTE), 5th Generation (5G), etc. In addition, an NFC module may perform communication by a near field communication (NFC) method using a 13.56MHz band among various RF-ID frequency bands such as 135kHz, 13.56MHz, 433MHz, 860 - 960MHz, 2.45GHz, etc. Further, a UWB module can correctly measure a Time of Arrival (ToA) which is the time that a pulse reaches a target, and an Angle of Arrival (AoA) which is a pulse arrival angle in a transmission device through communication between UWB antennas, and accordingly, the UWB module can perform precise distance and location recognition in an error range of within scores of cm indoors.

In particular, in various embodiments according to the disclosure, the processor 130 may broadcast an audio content by using the BLE audio protocol through the Bluetooth module. As the BLE audio protocol was explained above with reference to FIG. 1, overlapping explanation will be omitted.

The processor 130 may control the communicator 110 to transmit the first signal, the second signal, the fourth signal, and the fifth signal to the sink device 200. In particular, the processor 130 may broadcast the first signal and the second signal. Also, the processor 130 may receive the third signal, the first feedback information, the second feedback information, and the third feedback information from the sink device 200 through the communicator 110.

The communicator 110 may perform communication with the sink device 200 through the Bluetooth module, and also, perform communication with the sink device 200 by using at least one of the Wi-Fi module, the wireless communication module, the NFC module, or the UWB module. For example, the processor 130 may transmit and receive different signals by using different communication modules, or by using different wireless communication channels, such as transmitting the first signal to the sink device 200 by using the Bluetooth module, and transmitting the fourth signal to the sink device 200 by using the UWB module.

In the memory 120, at least one instruction regarding the electronic device 100 may be stored. Also, in the memory 120, an operating system (O/S) for driving the electronic device 100 may be stored. In addition, in the memory 120, various types of software programs or applications for the electronic device 100 to operate according to the various embodiments of the disclosure may be stored. Further, the memory 120 may include a semiconductor memory such as a flash memory, etc. or a magnetic storage medium such as a hard disk, etc.

Specifically, in the memory 120, various types of software modules for the electronic device 100 to operate according to the various embodiments of the disclosure may be stored, and the processor 130 may control the operations of the electronic device 100 by executing the various types of software modules stored in the memory 120. That is, the memory 120 may be accessed by the processor 130, and reading/recording/correction/deletion/update, etc. of data by the processor 130 may be performed.

Meanwhile, in the disclosure, the term memory 120 may be used as meaning including the memory 120, a ROM (not shown) or a RAM (not shown) inside the processor 130, or a memory card (not shown) (e.g., a micro SD card, a memory stick) installed on the electronic device 100.

In particular, in the various embodiments according to the disclosure, in the memory 120, the first signal, the second signal, the third signal, the fourth signal, and the fifth signal, and the first feedback information, the second feedback information, and the third feedback information may be stored. Also, in the memory 120, various kinds of information such as audio contents, information related to audio contents, passwords for audio contents, passwords for APs, etc. may be stored.

Other than the above, various kinds of information for achieving the purpose of the disclosure may be stored in the memory 120, and the information stored in the memory 120 may be updated as information is received from an external device or is input by the user.

The processor 130 controls the overall operations of the electronic device 100. Specifically, the processor 130 may be connected to the components of the electronic device 100 including the communicator 110 and the memory 120, and control the overall operations of the electronic device 100 by executing at least one instruction stored in the memory 120 as described above.

The processor 130 may be implemented by various methods. For example, the processor 130 may be implemented as at least one of an application specific integrated circuit (ASIC), an embedded processor, a microprocessor, a hardware control logic, a hardware finite state machine (FSM), or a digital signal processor (DSP). Meanwhile, in the disclosure, the term processor 130 may be used as meaning including a central processing unit (CPU), a graphic processing unit (GPU), a micro processor unit (MPU), etc.

According to one or more embodiments, the processor 130 may broadcast an encrypted audio content, and substantially at the same time, transmit information on the password used to encrypt the encrypted audio content to the sink device 200.

The processor 130 may broadcast the first signal including the encrypted audio content through the communicator 110. That is, the processor 130 can be configured to broadcast, through the communicator 110, the first signal including the audio content in an encrypted state. Specifically, the processor 130 may broadcast the first signal by using the Bluetooth low energy (BLE) audio protocol, and in the first signal, the audio content will be included in an encrypted state. The process of encrypting the audio content may be performed by the processor 130, or may be performed by an external device or an external server providing the audio content.

The processor 130 may broadcast the first signal over a predetermined period. Meanwhile, for a device located within a range in which the first signal can receive the broadcasted first signal, it is necessary that communicative connection is established according to a request for communicative connection and a response thereto.

The processor 130 may control the communicator 110 to transmit the second signal including identification information of the audio content to the sink device 200. Specifically, the processor 130 may periodically broadcast the second signal, or broadcast the second signal in case a request for the identification information is received. Then, the broadcasted second signal may be received by the sink device 200.

Here, 'the second signal' generally refers to a signal including the identification information of the audio content, and 'the identification information' may include unique identification information of the electronic device 100 and the identification information of the audio content (e.g.: a universally unique identifier (UUID)). The second signal may be replaced by the term 'an advertising packet.'

The processor 130 may receive the third signal corresponding to a user input related to the request for the audio content from the sink device 200 through the communicator 110. Specifically, when the second signal is transmitted to the sink device 200, the sink device 200 may provide the identification information of the audio content to the user based on the second signal. Afterwards, in response to the provided identification information of the second signal, the user may input the user input related to the request for the audio content broadcasted by the electronic device 100 into the sink device 200. For example, the user input may be input based on the user's touch input selecting the electronic device 100 and/or the audio content.

When the user input is input into the sink device 200, the sink device 200 may transmit the third signal corresponding to the user input to the electronic device 100, and accordingly, the processor 130 may receive the third signal from the sink device 200 through the communicator 110.

'The third signal' generally refers to a signal corresponding to a user input related to a request for an audio content, and may refer to a signal including a request for communicative connection between the electronic device 100 and the sink device 200.

When the third signal is received, the processor 130 may control the communicator 110 to transmit the fourth signal including information on the password used in encryption of the audio content to the sink device 200. That is, the processor 130 may transmit information on the password that was used when encrypting the audio content included in the first signal in an encrypted state, i.e., the password that can decrypt the audio content included in an encrypted state to the sink device 200. For example, the processor 130 may transmit the fourth signal to the sink device 200 by using a serial port profile (SPP). However, a protocol regarding transmission of the fourth signal is not limited to a specific type, and there is also no special limitation on the type of a packet that transmits information on a password.

'The fourth signal' generally refers to a signal including information on a password used in encryption of the audio content, and may refer to a signal including a response to a request for communicative connection between the electronic device 100 and the sink device 200. Also, there is no special limitation on the type of 'a password,' and the term password may be replaced by terms such as 'a secret number,' 'an encryption key,' etc.

In particular, the processor 130 may control the communicator 110 to transmit the first signal and the fourth signal to the sink device 200 by using different communication methods. Specifically, the first signal may be broadcasted by using the BLE audio protocol, and the fourth signal may be received from the electronic device 100 based on a protocol different from the BLE audio protocol. The processor 130 may transmit information on the password to the sink device 200 by using a separate communication method/protocol/channel different from a communication method/protocol/channel for broadcasting of the audio content. 'A different communication method' includes both of a wired communication method and a wireless communication method, and may include various types of wireless protocols as below.

For example, the processor 130 may transmit the first signal to the sink device 200 by using the Bluetooth module, and transmit the fourth signal to the sink device 200 by using the UWB module. Also, the processor 130 may transmit the first signal to the sink device 200 by using the first protocol through the Bluetooth module, and transmit the fourth signal to the sink device 200 by using the second protocol through the Bluetooth module.

Meanwhile, the first signal and the fourth signal may be transmitted and received between the electronic device 100 and the sink device 200 by using the same communication method/protocol/channel, and there is no special limitation on by using which communication method/protocol/channel the second signal and the third signal, and the fifth signal, the first feedback information, the second feedback information, and the third feedback information, etc. that will be described below are transmitted and received between the electronic device 100 and the sink device 200.

Meanwhile, as described above, the third signal includes a request for communicative connection between the electronic device 100 and the sink device 200, and the fourth signal includes a response to the request for communicative connection between the electronic device 100 and the sink device 200. Also, when the third signal and the fourth signal are exchanged between the electronic device 100 and the sink device 200, communicative connection for data exchange may be established between the electronic device 100 and the sink device 200. Accordingly, the first signal broadcasted by the electronic device 100 may be transmitted to the sink device 200. For example, in transmission of the first signal, a generic attribute profile (GATT) may be used, but the disclosure is not limited thereto.

When the first signal is received by the sink device 200, the sink device 200 may decrypt the audio content included in the encrypted state in the first signal based on the information on the password included in the fourth signal, and may thereby provide the audio content.

According to the one or more embodiments described above, the electronic device 100 may transmit information on a password to the sink device 200 separately from broadcasting an audio content, and may thereby enable the user to be provided with the audio content without inputting the password manually by using the sink device 200.

According to one or more embodiments, the fourth signal may be an ultrasonic signal or an ultra-wideband (UWB) signal. Specifically, an ultrasonic signal or a UWB signal is a signal of which frequency is high and of which wavelength is short, and has a characteristic that makes it difficult to pass through an obstacle such as a wall. Any signal having a characteristic that makes it difficult to pass through an obstacle such as a wall other than an ultrasonic signal or a UWB signal may be used in place of an ultrasonic signal or a UWB signal.

A signal having a high frequency has a lot of waves per unit length, and thus stronger absorption and reflection are generated when the signal interacts with an obstacle such as a wall, and it may be difficult to pass through an obstacle such as a wall. Also, a signal having a short wavelength has a tendency of interacting with a smaller object, and thus it may be difficult to pass through a big object such as a wall.

According to the aforementioned embodiment, if information on the password is transmitted as an ultrasonic signal or a UWB signal, only the sink device 200 located within a space that the ultrasonic signal or the UWB signal can reach may be able to decrypt the audio content, and accordingly, security of transmission of the audio content can be effectively improved.

According to one or more embodiments, the processor 130 may transmit the fourth signal only to the sink device 200 connected to the same access point (AP) as the electronic device 100. This is because the fact that the sink device 200 is connected to an AP that needs a password may indicate that it is a reliable device.

Specifically, the processor 130 may identify whether the sink device 200 is connected to the same AP connected to the electronic device 100. If it is identified that the sink device 200 is connected to the same AP that is also connected to the electronic device 100, then the processor 130 may control the communicator 110 to transmit the fourth signal to the sink device 200. If it is identified that the sink device 200 is not connected to the same AP connected to the electronic device 100, then the processor 130 may control the communicator 110 to transmit a guide message indicating that the password cannot be provided or data corresponding to non-provision of the password to the sink device 200. For example, the processor 130 may transmit the fourth signal through a Wi-Fi network of the AP to which the electronic device 100 and the sink device 200 are both connected. However, it is obvious that the fourth signal can be transmitted by a different communication method which is not a Wi-Fi network.

According to the aforementioned embodiment, if information on the password is transmitted only to the sink device 200 connected to the same AP connected to the electronic device 100, security regarding transmission of the audio content can be improved.

According to one or more embodiments, in case the fourth signal is transmitted only to the sink device 200 connected to the same AP that is also connected to the electronic device 100, the processor 130 may encrypt the information on a password included in the fourth signal with a password for the AP. That is, information on a password may be included in the fourth signal in an encrypted state based on a password for the AP.

Specifically, in the electronic device 100 and the sink device 200 connected to the same AP, a password for the AP may be stored. Accordingly, the processor 130 may encrypt information on a password for decrypting an audio content by using the password for the AP, and then include the information in the fourth signal and transmit it to the sink device 200. When the fourth signal is transmitted from the electronic device 100 to the sink device 200, the sink device 200 may decrypt the information on the password for decrypting the audio content based on the pre-stored password for the AP, and decrypt the audio content based on the decrypted information on the password.

According to the aforementioned embodiment, if the information on the password of the audio content is encrypted with the password for the AP, and then the information on the password is transmitted only to the sink device 200 connected to the same AP connected to the electronic device 100, security regarding transmission of the audio content can be further improved.

According to one or more embodiments, the processor 130 may receive at least one of the first feedback information regarding the strength of the first signal and the second feedback information regarding the quality of the first signal from the sink device 200 through the communicator 110, and adjust the strength of the first signal based on at least one of the first feedback information or the second feedback information.

Here, 'the first feedback information' refers to information indicating the strength of the first signal, and the processor 130 may obtain information on a distance between the electronic device 100 and the sink device 200 based on the information on the strength of the first signal. For example, the information on the strength of the first signal may include a so-called received signal strength indicator (RSSI) value. A higher RSSI value means that the strength of the signal is stronger, and this means that the distance between the electronic device 100 and the sink device 200 is smaller.

For example, if the strength of the first signal according to the first feedback information is greater than or equal to a predetermined threshold value, or the distance between the electronic device 100 and the sink device 200 according to the information on the strength of the first signal is smaller than a threshold distance, the processor 130 may decrease the strength of the first signal for preventing transmission of the first signal to an unnecessary or undesired device. In contrast, if the strength of the first signal according to the first feedback information is smaller than the predetermined threshold value, or the distance between the electronic device 100 and the sink device 200 according to the information on the strength of the first signal is greater than or equal to the threshold distance, the processor 130 may increase the strength of the first signal to improve the quality of the first signal.

'The second feedback information' refers to information indicating the quality of the first signal. The sink device 200 may obtain the second feedback information on the quality of the first signal by calculating a signal-to-noise ratio (SNR), a bit error rate (BER), etc. of the received first signal, and transmit the second feedback information to the electronic device 100.

For example, if the quality of the first signal according to the second feedback information is smaller than the predetermined threshold value, the processor 130 may increase the strength of the first signal for improving the quality of the first signal. In contrast, if the quality of the first signal according to the second feedback information is greater than or equal to the predetermined threshold value, the processor 130 may decrease the strength of the first signal for preventing transmission of the first signal to an unnecessary/undesired device.

Meanwhile, the processor 130 may adjust the strength of the first signal based on a combination of the first feedback information and the second feedback information. For example, in case the strength of the first signal according to the first feedback information is greater than or equal to a predetermined first threshold value, the processor 130 may decrease the strength of the first signal limited to a case wherein the quality of the first signal according to the second feedback information is greater than or equal to a predetermined second threshold value. Other than the above, the process of adjusting the strength of the first signal based on a combination of the first feedback information and the second feedback information may be performed by various methods.

According to the aforementioned embodiment, based on the strength or the quality of the first signal, the strength of the first signal that will be broadcasted afterwards may be adjusted. Meanwhile, as in the embodiment below, the processor 130 may receive a separate signal for identifying the distance between the electronic device 100 and the sink device 200, and adjust the strength of the first signal based on the received signal.

According to one or more embodiments, the processor 130 may control the communicator 110 to transmit the fifth signal for identifying the distance between the electronic device 100 and the sink device 200 to the sink device 200. When the third feedback information regarding the strength of the fifth signal is received from the sink device 200 through the communicator 110, the processor 130 may adjust the strength of the first signal based on the third feedback information.

'The fifth signal' refers to a signal that is transmitted from the electronic device 100 to the sink device 200 separately from the first signal, the second signal, and the fourth signal for identifying the distance between the electronic device 100 and the sink device 200. For example, the fifth signal may be a UWB or Wi-Fi aware signal, but is not limited thereto.

As the process of obtaining information on the distance between the electronic device 100 and the sink device 200 based on the third feedback information regarding the strength of the fifth signal, and the process of adjusting the strength of the first signal based on the information on the strength or the distance of the first signal were described above, overlapping explanation regarding the same content will be omitted.

The first feedback information, the second feedback information, and the third feedback information, and the information on the strength of the first signal that was adjusted based on at least one of the first feedback information, the second feedback information, or the third feedback information may be stored in the memory 120, and the information may be updated based on at least one of new first feedback information, second feedback information, or third feedback information.

According to the embodiments regarding adjustment of the strength of the first signal described above, the electronic device 100 can prevent transmission of an audio content to the outside of the space wherein the user is located by minimizing the strength of the first signal, and accordingly, the user's privacy can be better protected.

Meanwhile, various embodiments can be implemented as at least some of the operations of the processor 130 described above are performed by an external device (e.g.: a server or an edge computing device), etc. connected with the electronic device 100, and the electronic device 100 receives information according to the operations performed by the external device. For example, encryption of an audio content may be performed by an external device, and after the electronic device 100 receives information on the encrypted audio content and information on the password used in encryption, the electronic device 100 may transmit the information on the encrypted audio content and the information on the password to the sink device 200.

The interface part 140 may transmit and receive video data and/or audio data in a relation with an external device. Specifically, the interface part 140 may include an input port that can receive video data and/or audio data from an external device, and an output port that can transmit video data and/or audio data to an external device. In particular, in case the interface part 140 can transmit and receive both of video data and audio data, input/output ports that can transmit and receive video data and audio data may be implemented separately. The interface part 140 may connect the electronic device 100 and an external device via wire through a cable, but may additionally or alternatively connect the electronic device 100 and an external device wirelessly.

For example, the interface part 140 may include a high-definition multimedia interface (HDMI) module, a universal serial bus (USB) module, etc. An HDMI module is one of digital video/audio interface standards by a non-compression method, and may provide an interface between the electronic device 100 and an external device providing a content. The USB module may provide a communication system between the electronic device 100 and an external device providing a content by using a pre-defined input/output standard protocol. Other than the HDMI module and the USB module, the interface part 140 can obviously be implemented as various modules for providing video/voice data inputs and outputs between the electronic device 100 and an external device such as a display port (DP) module, an RGB module, a digital visual interface (DVI) module, and a Thunderbolt module, etc.

In particular, in various embodiments according to the disclosure, the processor 130 may transmit a video content to an external device connected with the electronic device 100 through the interface part 140. While the processor 130 transmits the video content to the external device through the interface part 140, the processor 130 may transmit an audio content corresponding to the video content to the external device through the interface part 140. Also, the processor 130 may transmit the audio content corresponding to the video content to the sink device 200 through the communicator 110. Other than the above, the interface part 140 may transmit and receive various kinds of information/data including a control signal between the electronic device 100 and an external device in various embodiments according to the disclosure.

The inputter 150 includes a circuit, and the processor 130 may receive a user instruction for controlling the operations of the electronic device 100 through the inputter 150. Specifically, the inputter 150 may consist of components such as a microphone, a camera, and a remote control signal receiver, etc. Also, the inputter 150 may be implemented in a form of being included in the display as a touch screen. In particular, the microphone may receive a voice signal, and convert the received voice signal into an electric signal.

In particular, in the various embodiments according to the disclosure, the processor 130 may receive various user inputs such as a user input for broadcasting the first signal through the inputter 150, a user input for changing a password used in encryption of an audio content, etc. A user input may be input in various types such as a touch input through the display, a voice input through the microphone, a motion input through the camera, etc.

The outputter 160 includes a circuit, and the processor 130 may output various functions that the electronic device 100 can perform through the outputter 160. Also, the outputter 160 may include at least one of a display, a speaker, or an indicator.

The display may output video data under control by the processor 130. Specifically, the display may output an image stored in the memory 120 in advance by control by the processor 130. In particular, the display according to an embodiment of the disclosure may display a user interface stored in the memory 120.

The display may be implemented as a liquid crystal display (LCD) panel, organic light emitting diodes (OLED), etc., and the display can also be implemented as a flexible display, a transparent display, etc. depending on cases. However, the display according to the disclosure is not limited to a specific type.

The speaker may output audio data under control by the processor 130, and the indicator may be turned on under control by the processor 130.

In particular, in the various embodiments according to the disclosure, the processor 130 may control the display to display a video content, and while the video content is displayed on the display, the processor 130 may control the communicator 110 to broadcast an audio content corresponding to the video content.

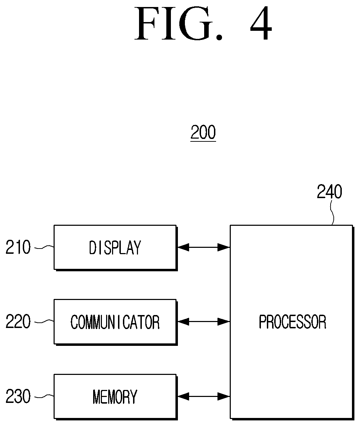

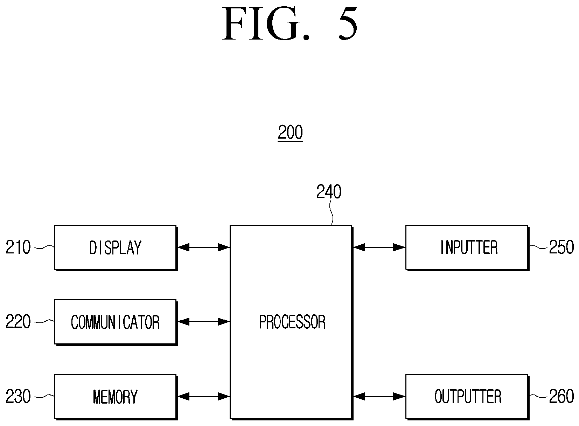

FIG. 4 is a block diagram schematically illustrating a configuration of the sink device 200 according to an embodiment of the disclosure, and FIG. 5 is a block diagram illustrating in detail a configuration of the sink device 200 according to an embodiment of the disclosure.

As illustrated in FIG. 4, the sink device 200 may include a display 210, a communicator 220, a memory 230, and a processor 240. Also, as illustrated in FIG. 5, the electronic device 100 may further include an inputter 250 and an outputter 260. However, the components as illustrated in FIG. 4 and FIG. 5 are merely exemplary ones, and it is obvious that in implementing the disclosure, one or more new components can be added in addition to the components as illustrated in FIG. 4 and FIG. 5, and/or one or more of the components can be omitted.

The display 210, the communicator 220, the memory 230, the processor 240, the inputter 250, and the outputter 260 of the sink device 200 may basically be the same components as the display 210, the communicator 220, the memory 230, the processor 240, the inputter 250, and the outputter 260 included in the electronic device 100. Accordingly, in the explanation regarding the display 210, the communicator 220, the memory 230, the processor 240, the inputter 250, and the outputter 260 below, explanation overlapping with FIG. 2 and FIG. 3 will be omitted.

The display 210 may output video data under control by the processor 240. In particular, if the second signal including identification information of an audio content is received from the electronic device 100, the processor 240 may display a user interface including the unique identification information of the electronic device 100 and the identification information of the audio content.

The communicator 220 includes a circuit, and may perform communication with an external device including the electronic device 100. Specifically, the processor 240 may receive various types of data or information from a connected external device through the communicator 220, or transmit various types of data or information to the external device.

The processor 240 may receive the first signal, the second signal, the fourth signal, and the fifth signal from the electronic device 100 through the communicator 220. Also, the processor 240 may control the communicator 220 to transmit the third signal, the first feedback information, the second feedback information, and the third feedback information to the electronic device 100.

Further, the processor 240 may control the communicator 220 to transmit the first signal and the fourth signal to the audio output device 300, and may thereby provide the audio content through the audio output device 300. Also, the processor 240 may decrypt the encrypted information included in the first signal based on the password included in the fourth signal, and control the communicator 220 to transmit the decrypted information to the audio output device 300, and may thereby make an audio content provided through the audio output device 300.

In the memory 230, the first signal, the second signal, the third signal, the fourth signal, and the fifth signal, and the first feedback information, the second feedback information, and the third feedback information may be stored. Also, in the memory 230, various kinds of information such as audio contents, information related to audio contents, passwords for audio contents, passwords for APs, etc. may be stored.

Other than the above, various kinds of necessary information for achieving the purpose of the disclosure may be stored in the memory 230, and the information stored in the memory 230 may be updated as information is received from an external device or is input by the user.

According to one or more embodiments, the processor 240 may receive an audio content broadcasted by the electronic device 100, and also receive information on the password of the audio content from the electronic device 100.

The processor 240 may receive the first signal which is broadcasted by the electronic device 100 and includes information wherein an audio content has been encrypted from the electronic 100 device through the communicator 220. That is, the processor 240 can be configured to receive, through the communicator 220, the first signal including the audio content in an encrypted state. As described above, 'the first signal' refers to a signal for an audio content broadcasted by the electronic device 100.

The processor 240 may receive the first signal broadcasted by the electronic device 100 by transmitting and receiving the second signal, the third signal, and the fourth signal through a process that will be described below, and may also receive information on a password for decryption of the encrypted information included in the first signal. That is, the first signal may be periodically broadcasted through the electronic device 100, but may be transmitted to the sink device 200 after communicative connection between the electronic device 100 and the sink device 200 is established, and may also be provided by the sink device 200 after the sink device 200 obtains information on the password.

If the second signal including identification information of the audio content is received from the electronic device 100 through the communicator 220, the processor 240 may control the display 210 to display the identification information of the audio content. As described above, 'the second signal' generally refers to a signal including the identification information of the audio content, and 'the identification information' may include the unique identification information of the electronic device 100 and the identification information of the audio content.

Specifically, the processor 240 may provide a user interface including the unique identification information of the electronic device 100 and the identification information of the audio content. Also, a user input related to a request for the audio content may be received through the user interface. For example, the user input may be input based on the user's touch input selecting the electronic device 100 and/or the audio content.

When the user input related to the request for the audio content is received, the processor 240 may control the communicator 220 to transmit the third signal corresponding to the user input to the electronic device 100. As described above, 'the third signal' generally refers to a signal corresponding to a user input related to a request for an audio content, and may refer to a signal including a request for communicative connection between the electronic device 100 and the sink device 200.

The processor 240 may receive the fourth signal including information on the password from the electronic device 100 through the communicator 220. Then, when the fourth signal is received, the processor 240 may decrypt the encrypted information based on the password, and provide the audio content based on the decrypted information. As described above, 'the fourth signal' generally refers to a signal including information on a password used in encryption of an audio content, and may refer to a signal including a response to a request for communicative connection between the electronic device 100 and the sink device 200.

In particular, the first signal and the fourth signal may be received from the electronic device 100 by using different communication methods. Specifically, the first signal may be broadcasted by using the BLE audio protocol, and the fourth signal may be received from the electronic device 100 based on a different protocol from the BLE audio protocol.

For example, the processor 240 may receive the first signal from the electronic device 100 by using the Bluetooth module, and receive the fourth signal from the electronic device 100 by using the UWB module. Also, the processor 240 may receive the first signal from the electronic device 100 by using the first protocol through the Bluetooth module, and receive the fourth signal from the electronic device 100 by using the second protocol through the Bluetooth module.

Meanwhile, the feature of providing an audio content may include providing an audio content as the sink device 200 outputs the audio content, and providing an audio content by transmitting information on the audio content as the audio content such that the audio output device 300 outputs the audio content. For example, the processor 240 may provide an audio content by controlling the communicator 220 to transmit decrypted information to the audio output device 300 connected to the sink device 200.

According to the one or more embodiments described above, the sink device 200 may receive information on a password from the electronic device 100 separately from receiving a broadcasted audio content, and may thereby enable the user to be provided with the audio content without inputting the password manually by using the sink device 200.

According to one or more embodiments, the fourth signal may be an ultrasonic signal or an ultra-wideband (UWB) signal. Any signal having a characteristic that it is difficult to pass through an obstacle such as a wall other than an ultrasonic signal or a UWB signal may be used in place of an ultrasonic signal or a UWB signal.

According to the aforementioned embodiment, if information on the password is received as an ultrasonic signal or a UWB signal, only the sink device 200 located within a space that the ultrasonic signal or the UWB signal can reach may be made to decrypt the audio content, and accordingly, security regarding transmission of the audio content can be improved by an effective method.

According to one or more embodiments, the sink device 200 may be connected to the same network through an access point (AP) connected with the electronic device 100. Also, information on a password may be included in the fourth signal in an encrypted state based on a password for the AP.

According to the aforementioned embodiment, if only the sink device 200 connected to the same AP as the electronic device 100 receives information on the password, and further, if the information is encrypted with the password for the AP and then only the sink device 200 connected to the same AP as the electronic device 100 receives the information on the password, security regarding transmission of the audio content can be further improved.

According to one or more embodiments, the processor 240 may control the communicator 220 to transmit at least one of the first feedback information regarding the strength of the first signal or the second feedback information regarding the quality of the first signal to the electronic device 100. Then, the processor 240 may receive the first signal of which strength has been adjusted according to at least one of the first feedback information or the second feedback information from the electronic device 100 through the communicator 220.

Also, according to one or more embodiments, the processor 240 may receive the fifth signal for identifying the distance between the sink device 200 and the electronic device 100 from the electronic device 100 through the communicator 220. The processor 240 may control the communicator 220 to transmit the third feedback information regarding the strength of the fifth signal to the electronic device 100, and receive the first signal of which strength has been adjusted according to the third feedback information.

According to the embodiments regarding adjustment of the strength of the first signal described above, the sink device 200 can prevent transmission of an audio content to the outside of the space wherein the user is located, and accordingly, the user's privacy can be better protected.

Meanwhile, various embodiments can be implemented as at least some of the operations of the processor 240 described above are performed by an external device (e.g.: a server or an edge computing device), etc. connected with the sink device 200, and the sink device 200 receives information according to the operations performed by the external device. For example, a user input related to a request for an audio content may be input by an external device, and the sink device 200 may receive the third signal corresponding to the user input, and transmit the received third signal to the electronic device 100.

The inputter 250 includes a circuit, and the processor 240 may receive a user instruction for controlling the operations of the electronic device 100 through the inputter 250. Specifically, the inputter 250 may consist of components such as a microphone, a camera, and a remote control signal receiver, etc. Also, the inputter 250 may be implemented in a form of being included in the display 210 as a touch screen. In particular, the microphone may receive a voice signal, and convert the received voice signal into an electric signal.

In particular, the processor 240 may receive a user input related to a request for an audio content through the inputter 250. For example, the processor 240 may receive the user's touch input selecting the electronic device 100 and/or an audio content through the inputter 250. The processor 240 may receive a user input inputting a password for decryption of an encrypted audio content through the inputter 250. Also, the processor 240 may receive a user input selecting the audio output device 300 for transmitting an audio content through the inputter 250.

The outputter 260 includes a circuit, and the processor 240 may perform various functions that the electronic device 100 can perform through the outputter 260. Also, the outputter 260 may include at least one of the display 210, a speaker, or an indicator.

In particular, the processor 240 may output an audio content through the outputter 260. Specifically, the processor 240 may decrypt encrypted information based on a password, and output an audio content through the outputter 260 based on the decrypted information.

FIG. 6 is a diagram for illustrating in detail an embodiment related to adjusting the strength of a first signal.

As illustrated in FIG. 6, the system 1000 according to the disclosure may not only include the electronic device 100 and the sink device 200, but also further include the audio output device 300. The audio output device 300 refers to a device that can output an audio content, and may be implemented, for example, not only as a Bluetooth speaker and an artificial intelligence speaker, but also as a smartphone, a tablet PC, etc. That is, any device that can receive an audio content from the sink device 200, and output the audio content through the speaker may fall under the audio output device 300 according to the disclosure.

Meanwhile, in FIG. 6, explanation will be described on the premise of the system 1000 including the audio output device 300 for clearly indicating that the various embodiments of the disclosure can be applied to the system 1000 further including the audio output device 300. However, the embodiments that will be explained below are not applied limited to a case of including the audio output device 300. Also, the aforementioned various embodiments may also be implemented in the system 1000 further including the audio output device 300.

As illustrated in FIG. 6, the electronic device 100 may broadcast the first signal including an audio content in operation S610. Here, the audio content may be broadcasted while being included in the first signal in an unencrypted state. That is, in the explanation regarding FIG. 2 to FIG. 4, embodiments wherein an audio content is broadcasted while being included in the first signal in an encrypted state were explained, but an audio content may be broadcasted while being included in the first signal in an unencrypted state.

The electronic device 100 may transmit the second signal including identification information of the audio content to the sink device 200 in operation S615. The second signal may also be broadcasted by the electronic device 100 and transmitted to the sink device 200.

When the second signal is received, the sink device 200 may transmit the received second signal to the audio output device 300 in operation S620. For example, the sink device 200 may output the identification information included in the second signal through the display of the sink device 200, or output the identification information included in the second signal through the speaker of the audio output device 300 by transmitting the second signal to the audio output device 300.

After the second signal is received, the sink device 200 may receive a user input related to a request for the audio content in operation S625. When the user input is received, the sink device 200 may transmit the third signal corresponding to the user input to the electronic device 100 in operation S630. Here, as described above in the explanation regarding FIG. 2 to FIG. 4, the electronic device 100 may transmit the fourth signal including information on a password used in encryption of the audio content to the sink device 200 as a response to the third signal.

However, as illustrated in FIG. 6, the electronic device 100 may transmit the first signal including the audio content to the sink device 200 as a response to the third signal in operation S635. Depending on embodiments, a separate signal including a response to a request for communicative connection with the sink device 200 may be transmitted from the electronic device 100 to the sink device 200 prior to the first signal.

When the first signal is received, the sink device 200 may transmit the first signal to the audio output device 300 in operation S640. Also, when the first signal is received, the audio output device 300 may output the audio content in operation S645. Like this, if the audio content is transmitted to the sink device 200 and the audio output device 300 in an unencrypted state, the audio content may be provided to a user who does not have authority, and accordingly, there is a possibility that the privacy of the user who has authority may be damaged.

Accordingly, when the first signal is received, the sink device 200 may transmit feedback information regarding the strength of the first signal in operation S650. Specifically, when the first signal is received, the sink device 200 may obtain feedback information regarding the strength of the first signal that is referred to as a so-called received signal strength indicator (RSSI) value, and transmit the obtained feedback information to the electronic device 100.

When the feedback information is received, the electronic device 100 may adjust the strength of the first signal based on the feedback information in operation S655. That is, the electronic device 100 may adjust the strength of the first signal that is periodically or constantly broadcasted after the feedback information is received and transmit the first signal, and accordingly, the sink device 200 may receive the first signal of the adjusted strength in operation S660.

When the first signal of the adjusted strength is received, the sink device 200 may transmit the first signal of the adjusted strength to the audio output device 300 in operation S665. When the first signal is received, the audio output device 300 may output the audio content in operation S670.

Meanwhile, in the above, an embodiment of adjusting the strength of the first signal based on the feedback information regarding the strength of the first signal was explained, but as described above, it is also possible that the electronic device 100 transmits the separate fifth signal to the sink device 200 prior to transmission of the first signal, and receives the third feedback information regarding the strength of the fifth signal from the sink device 200, and adjusts the strength of the first signal. Also, it is possible that the electronic device 100 transmits the fourth signal to the sink device 200 prior to transmission of the first signal, and receives the fourth feedback information regarding the strength of the fourth signal from the sink device 200, and adjusts the strength of the first signal.

Meanwhile, the feedback information explained in FIG. 6 refers to the first feedback signal defined in the explanation regarding FIG. 2 to FIG. 4. Meanwhile, it is also possible to adjust the strength of the first signal based on the second feedback signal and the third feedback signal as described above with reference to FIG. 2 to FIG. 4.

According to the one or more embodiments described above, transmission of an audio content to outside of the space wherein the user is located can be prevented, and accordingly, the user's privacy can be better protected.

FIG. 7 is a flow chart illustrating a controlling method of the electronic device 100 according to an embodiment of the disclosure.

As illustrated in FIG. 7, the electronic device 100 may broadcast a first signal including information wherein an audio content has been encrypted in operation S710. That is, the electronic device 100 can be configured to broadcast the first signal including the audio co ntent in an encrypted state. Specifically, the electronic device 100 may broadcast the first signal by using the Bluetooth low energy (BLE) audio protocol, and in the first signal, an audio content may be included in an encrypted state. The electronic device 100 may broadcast the first signal over a predetermined period.

The electronic device 100 may transmit a second signal including identification information of the audio content to the sink device 200 in operation S720. The electronic device 100 may periodically broadcast the second signal, or broadcast the second signal in case a request for the identification information is received.

The electronic device 100 may receive a third signal corresponding to a user input related to a request for the audio content from the sink device 200 in operation S730. Specifically, if a user input selecting the electronic device 100 and/or the audio content is input into the sink device 200, the sink device 200 may transmit the third signal corresponding to the user input to the electronic device 100, and accordingly, the electronic device 100 may receive the third signal from the sink device 200.

When the third signal is received, the electronic device 100 may transmit the fourth signal including information on a password used in encryption to the sink device 200 in operation S740. The electronic device 100 may transmit the first signal and the fourth signal to the sink device 200 by using different communication methods. Specifically, the first signal may be broadcasted by using the BLE audio protocol, and the fourth signal may be received from the electronic device 100 based on a different protocol from the BLE audio protocol.

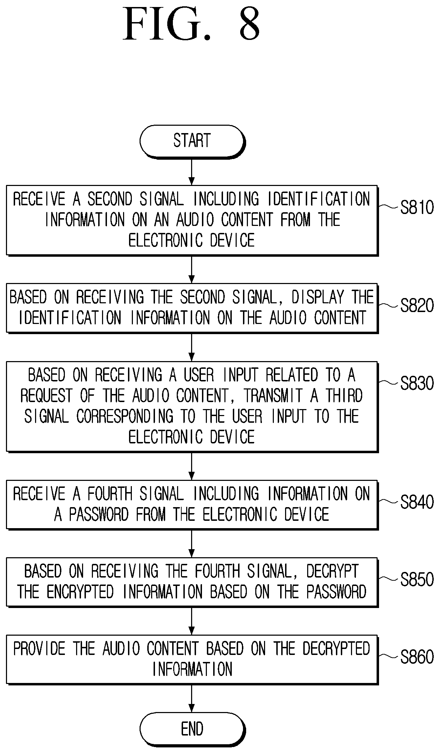

FIG. 8 is a flow chart illustrating a controlling method of the sink device 200 according to an embodiment of the disclosure.

FIG. 8 relates to a controlling method of the sink device 200 receiving a first signal which is broadcasted by the electronic device 100 and includes information wherein an audio content has been encrypted from the electronic device 100. The first signal may be periodically broadcasted through the electronic device 100, but may be transmitted to the sink device 200 after communicative connection between the electronic device 100 and the sink device 200 is established, and may also be provided by the sink device 200 after the sink device 200 obtains information on the password.

As illustrated in FIG. 8, the sink device 200 may receive a second signal including identification information of the audio content from the electronic device 100 in operation S810. Then, when the second signal is received, the sink device 200 may display the identification information of the audio content in operation S820.

Specifically, the sink device 200 may provide a user interface including the unique identification information of the electronic device 100 and the identification information of the audio content. Then, a user input related to a request for the audio content may be received through the user interface. For example, the user input may be input based on the user's touch input selecting the electronic device 100 and/or the audio content. When the user input related to the request for the audio content is received, the sink device 200 may transmit a third signal corresponding to the user input to the electronic device 100 in operation S830. Then, the sink device 200 may receive a fourth signal including the information on the password from the electronic device 100 in operation S840.

Specifically, when the third signal is transmitted to the electronic device 100, the electronic device 100 may transmit the fourth signal to the sink device 200 as a response to the third signal. In particular, the first signal and the fourth signal may be received from the electronic device 100 by using different communication methods. Specifically, the first signal may be broadcasted by using the BLE audio protocol, and the fourth signal may be received from the electronic device 100 based on a different protocol from the BLE audio protocol.

When the fourth signal is received, the sink device 200 may decrypt the encrypted information based on the password in operation S850, and provide the audio content based on the decrypted information in operation S860.

The feature of providing an audio content may include providing an audio content as the sink device 200 outputs the audio content, and providing an audio content by transmitting information on the audio content as the audio content such that the audio output device 300 outputs the audio content. For example, the processor may provide the audio content by controlling the communicator to transmit the decrypted information to the audio output device 300 connected to the sink device 200.

Meanwhile, the controlling method of the electronic device 100 and the controlling method of the sink device 200 according to the aforementioned embodiment may be implemented as programs, and provided to the electronic device 100 and the sink device 200. In particular, programs including the controlling methods of the electronic device 100 and the sink device 200 may be provided while being stored in a non-transitory computer readable medium.

Specifically, in a non-transitory computer readable recording medium including a program executing a controlling method of the electronic device 100, the controlling method of the electronic device 100 may include the steps of broadcasting a first signal including information wherein an audio content has been encrypted, transmitting a second signal including identification information of the audio content to the sink device 200, receiving a third signal corresponding to a user input related to a request for the audio content from the sink device 200, and based on receiving the third signal, transmitting a fourth signal including information on a password used in encryption to the sink device 200.

Meanwhile, in a non-transitory computer readable recording medium including a program executing the controlling method of the sink device 200, the sink device 200 may receive a first signal that is broadcasted by the electronic device 100 and includes information wherein an audio content has been encrypted, and the controlling method of the sink device 200 may include the steps of receiving a second signal including identification information of the audio content from the electronic device 100, and based on receiving the second signal, displaying the identification information of the audio content, and based on receiving a user input related to a request for the audio content, transmitting a third signal corresponding to the user input to the electronic device 100, receiving a fourth signal including information on a password from the electronic device 100, and based on receiving the fourth signal, decrypting the encrypted information based on the password, and providing the audio content based on the decrypted information.

In the above, a controlling method of the electronic device 100, and a computer readable recording medium including a program executing the controlling method of the electronic device 100 were explained briefly, but this is just for omitting overlapping explanation, and the various embodiments regarding the electronic device 100 can obviously be applied to the controlling method of the electronic device 100, and the computer readable recording medium including a program executing the controlling method of the electronic device 100.

A storage medium that is readable by machines may be provided in the form of a non-transitory storage medium. Here, the term 'a non-transitory storage medium' only means that the device is a tangible device, and does not include a signal (e.g.: an electromagnetic wave), and the term does not distinguish a case wherein data is stored semi-permanently in a storage medium and a case wherein data is stored temporarily. For example, 'a non-transitory storage medium' may include a buffer wherein data is temporarily stored.

According to an embodiment, methods according to the various embodiments disclosed herein may be provided while being included in a computer program product. A computer program product refers to a product, and it can be traded between a seller and a buyer. A computer program product can be distributed in the form of a storage medium that is readable by machines (e.g.: a compact disc read only memory (CD-ROM)), or distributed directly on-line (e.g.: download or upload) through an application store (e.g.: Play Store^{™}), or between two user devices (e.g.: smartphones). In the case of on-line distribution, at least a portion of a computer program product (e.g.: a downloadable app) may be stored in a storage medium readable by machines such as the server of the manufacturer, the server of the application store, and the memory of the relay server at least temporarily, or may be generated temporarily.

Also, each of the components (e.g.: a module or a program) according to the aforementioned various embodiments of the disclosure may consist of a singular object or a plurality of objects. Further, among the aforementioned corresponding sub components, some sub components may be omitted, or other sub components may be further included in the various embodiments. Altematively or additionally, some components (e.g.: a module or a program) may be integrated as an object, and perform functions that were performed by each of the components before integration identically or in a similar manner.

In addition, operations performed by a module, a program, or other components according to the various embodiments may be executed sequentially, in parallel, repetitively, or heuristically. Altematively, at least one of the operations may be executed in a different order or omitted, or one or more other operations may be added.

Meanwhile, the term "a part" or "a module" used in the disclosure may include a unit implemented as hardware, software, or firmware, and may be interchangeably used with, for example, terms such as a logic, a logical block, a component, or a circuit. In addition, "a part" or "a module" may be a component constituted as an integrated body or a minimum unit or a part thereof performing one or more functions. For example, a module may be constituted as an application-specific integrated circuit (ASIC).

Also, the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: the electronic device 100, the sink device 200).

In case an instruction is executed by a processor, the processor may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the disclosure as claimed by the appended claims.

## Claims

1. An electronic device (100) comprising:
a communicator (110);
a memory (120) storing an audio content; and
a processor (130) configured to broadcast, through the communicator, a first signal including the audio content in an encrypted state,
wherein the processor is further configured to:
control the communicator to transmit a second signal including identification information of the audio content to a sink device, and
based on receiving, through the communicator, a third signal corresponding to a user input related to a request for the audio content in response to the second signal from the sink device, control the communicator to transmit a fourth signal including information on a password used in the encryption of the audio content to the sink device.

2. The electronic device of claim 1,
wherein the processor (130) is configured to:
broadcast the first signal using a Bluetooth low energy, BLE, audio protocol, and
wherein the fourth signal is transmitted to the sink device using a communication method different to the BLE audio protocol.

3. The electronic device of claim 1,
wherein the processor (130) is configured to:
receive at least one of first feedback information regarding strength of the first signal and second feedback information regarding quality of the first signal from the sink device through the communicator, and
adjust the strength of the broadcasted first signal based on at least one of the first feedback information and the second feedback information.

4. The electronic device of claim 3,
wherein the processor (130) is configured to:
control the communicator (110) to transmit, to the sink device, a fifth signal for identifying a distance between the electronic device (100) and the sink device, and
based on receiving, through the communicator, third feedback information regarding strength of the fifth signal from the sink device, adjust the strength of the first signal based on the third feedback information.

5. The electronic device of claim 1,
wherein the fourth signal is an ultrasonic signal or an ultra-wideband, UWB, signal.

6. The electronic device of claim 1,
wherein the processor (130) is configured to:
based on the sink device being connected to an access point, AP, that is also connected to the electronic device (100), control the communicator (110) to transmit the fourth signal to the sink device, and
based on the sink device not being connected to the AP connected to the electronic device, control the communicator to transmit data corresponding to non-provision of the password to the sink device.

7. The electronic device of claim 6,
wherein the information on the password included in the fourth signal is encrypted using a password for the AP.

8. A sink device (200) comprising:
a communicator (220);
a display (210);
a memory (230) storing at least one instruction; and
a processor (240) configured to receive, through the communicator, a first signal broadcasted by an electronic device and including audio content in an encrypted state,
wherein the processor is further configured to:
based on receiving, through the communicator, a second signal including identification information of an audio content from the electronic device, control the display to display the identification information of the audio content,
based on receiving a user input related to a request for the audio content in response to the displaying of the identification information of the second signal, control the communicator to transmit a third signal corresponding to the user input to the electronic device, and
based on receiving, through the communicator, a fourth signal including information on a password from the electronic device, provide the audio content by decrypting the audio content in the encrypted state using the password.

9. The sink device of claim 8,
wherein the first signal is broadcasted by using a Bluetooth low energy, BLE, audio protocol, and
wherein the fourth signal is received from the electronic device using a communication method different to the BLE audio protocol.

10. The sink device of claim 8,
wherein the processor (240) is configured to:
control the communicator (220) to transmit at least one of first feedback information regarding strength of the first signal and second feedback information regarding quality of the first signal to the electronic device, and
receive the first signal from the electronic device through the communicator, wherein the strength of the first signal has been adjusted according to at least one of the first feedback information and the second feedback information.

11. The sink device of claim 10,
wherein the processor (240) is configured to:
receive, from the electronic device through the communicator (220), a fifth signal for identifying a distance between the sink device (200) and the electronic device,
control the communicator to transmit third feedback information regarding the strength of the fifth signal to the electronic device, and
receive the first signal from the electronic device through the communicator, wherein the strength of the first signal has been adjusted according to the third feedback information.

12. The sink device of claim 8,
wherein the fourth signal is an ultrasonic signal or an ultra-wideband, UWB, signal.

13. The sink device of claim 8, wherein the sink device (200) is connected to an access point, AP, that is also connected to the electronic device.

14. The sink device of claim 13,
wherein the information on the password included in the fourth signal is encrypted using a password for the AP.

15. The sink device of claim 8,
wherein the processor (240) is configured to:
provide the audio content by controlling the communicator (220) to transmit the decrypted audio content to an audio output device connected to the sink device (200).

## Patentansprüche

1. Elektronische Vorrichtung (100), umfassend:
einen Kommunikator (110);
einen Speicher (120), der einen Audioinhalt speichert; und
einen Prozessor (130), der dazu konfiguriert ist, durch den Kommunikator ein erstes Signal zu senden, das den Audioinhalt in einem verschlüsselten Zustand enthält,
wobei der Prozessor ferner zu Folgendem konfiguriert ist:
Steuern des Kommunikators, sodass er ein zweites Signal, das Identifikationsinformationen des Audioinhalts enthält, an eine Senkenvorrichtung überträgt, und
basierend auf einem Empfangen eines dritten Signals durch den Kommunikator, das einer Benutzereingabe in Bezug auf eine Anforderung des Audioinhalts entspricht, als Reaktion auf das zweite Signal von der Senkenvorrichtung, Steuern des Kommunikators, sodass er ein viertes Signal überträgt, das Informationen über ein Passwort enthält, das bei der Verschlüsselung des Audioinhalts verwendet wird, an die Senkenvorrichtung.

2. Elektronische Vorrichtung nach Anspruch 1,
wobei der Prozessor (130) zu Folgendem konfiguriert ist:
Senden des ersten Signals unter Verwendung eines Bluetooth-Low-Energy-Audioprotokolls, BLE-Audioprotokolls, und
wobei das vierte Signal unter Verwendung eines Kommunikationsverfahrens, das sich von dem BLE-Audioprotokoll unterscheidet, an die Senkenvorrichtung übertragen wird.

3. Elektronische Vorrichtung nach Anspruch 1,
wobei der Prozessor (130) zu Folgendem konfiguriert ist:
Empfangen mindestens eines von ersten Rückmeldungsinformationen bezüglich einer Stärke des ersten Signals und zweiten Rückmeldungsinformationen bezüglich einer Qualität des ersten Signals von der Senkenvorrichtung durch den Kommunikator und
Einstellen der Stärke des gesendeten ersten Signals basierend auf mindestens einem von den ersten Rückmeldungsinformationen und den zweiten Rückmeldungsinformationen.

4. Elektronische Vorrichtung nach Anspruch 3,
wobei der Prozessor (130) zu Folgendem konfiguriert ist:
Steuern des Kommunikators (110), sodass er ein fünftes Signal zum Identifizieren eines Abstands zwischen der elektronischen Vorrichtung (100) und der Senkenvorrichtung an die Senkenvorrichtung überträgt, und
basierend auf einem Empfangen dritter Rückmeldungsinformationen bezüglich einer Stärke des fünften Signals von der Senkenvorrichtung durch den Kommunikator, Einstellen der Stärke des ersten Signals basierend auf den dritten Rückmeldungsinformationen.

5. Elektronische Vorrichtung nach Anspruch 1,
wobei das vierte Signal ein Ultraschallsignal oder ein Ultrabreitbandsignal, UWB-Signal, ist.

6. Elektronische Vorrichtung nach Anspruch 1,
wobei der Prozessor (130) zu Folgendem konfiguriert ist:
basierend darauf, dass die Senkenvorrichtung mit einem Zugangspunkt, AP, verbunden ist, der ebenfalls mit der elektronischen Vorrichtung (100) verbunden ist, Steuern des Kommunikators (110), sodass er das vierte Signal an die Senkenvorrichtung überträgt, und
basierend darauf, dass die Senkenvorrichtung nicht mit dem AP verbunden ist, der mit der elektronischen Vorrichtung verbunden ist, Steuern des Kommunikators, sodass er Daten, die einer Nichtbereitstellung des Passworts entsprechen, an die Senkenvorrichtung überträgt.

7. Elektronische Vorrichtung nach Anspruch 6,
wobei die Informationen über das Passwort, die in dem vierten Signal enthalten sind, unter Verwendung eines Passworts für den AP verschlüsselt sind.

8. Senkenvorrichtung (200), umfassend:
einen Kommunikator (220);
eine Anzeige (210);
einen Speicher (230), der mindestens eine Anweisung speichert; und
einen Prozessor (240), der dazu konfiguriert ist, durch den Kommunikator ein erstes Signal zu empfangen, das durch eine elektronische Vorrichtung gesendet wird und Audioinhalt in einem verschlüsselten Zustand enthält,
wobei der Prozessor ferner zu Folgendem konfiguriert ist:
basierend auf einem Empfangen eines zweiten Signals, das Identifikationsinformationen eines Audioinhalts enthält, von der elektronischen Vorrichtung durch den Kommunikator, Steuern der Anzeige, sodass die Identifikationsinformationen des Audioinhalts angezeigt werden,
basierend auf einem Empfangen einer Benutzereingabe in Bezug auf eine Anforderung des Audioinhalts als Reaktion auf das Anzeigen der Identifikationsinformationen des zweiten Signals, Steuern des Kommunikators, sodass er ein drittes Signal, das der Benutzereingabe entspricht, an die elektronische Vorrichtung überträgt, und
basierend auf einem Empfangen eines vierten Signals, das Informationen über ein Passwort enthält, von der elektronischen Vorrichtung durch den Kommunikator, Bereitstellen des Audioinhalts durch Entschlüsseln des Audioinhalts in dem verschlüsselten Zustand unter Verwendung des Passworts.

9. Senkenvorrichtung nach Anspruch 8,
wobei das erste Signal unter Verwendung eines Bluetooth-Low-Energy-Audioprotokolls, BLE-Audioprotokolls, gesendet wird, und
wobei das vierte Signal unter Verwendung eines Kommunikationsverfahrens, das sich von dem BLE-Audioprotokoll unterscheidet, von der elektronischen Vorrichtung empfangen wird.

10. Senkenvorrichtung nach Anspruch 8,
wobei der Prozessor (240) zu Folgendem konfiguriert ist:
Steuern des Kommunikators (220), sodass er mindestens eines von ersten Rückmeldungsinformationen bezüglich einer Stärke des ersten Signals und zweiten Rückmeldungsinformationen bezüglich einer Qualität des ersten Signals an die elektronische Vorrichtung überträgt, und
Empfangen des ersten Signals von der elektronischen Vorrichtung durch den Kommunikator, wobei die Stärke des ersten Signals gemäß mindestens einem von den ersten Rückmeldungsinformationen und den zweiten Rückmeldungsinformationen eingestellt wurde.

11. Senkenvorrichtung nach Anspruch 10,
wobei der Prozessor (240) zu Folgendem konfiguriert ist:
Empfangen eines fünften Signals von der elektronischen Vorrichtung durch den Kommunikator (220) zum Identifizieren eines Abstands zwischen der Senkenvorrichtung (200) und der elektronischen Vorrichtung,
Steuern des Kommunikators, sodass er dritte Rückmeldungsinformationen bezüglich der Stärke des fünften Signals an die elektronische Vorrichtung überträgt, und
Empfangen des ersten Signals von der elektronischen Vorrichtung durch den Kommunikator, wobei die Stärke des ersten Signals gemäß den dritten Rückmeldungsinformationen eingestellt wurde.

12. Senkenvorrichtung nach Anspruch 8,
wobei das vierte Signal ein Ultraschallsignal oder ein Ultrabreitbandsignal, UWB-Signal, ist.

13. Senkenvorrichtung nach Anspruch 8, wobei die Senkenvorrichtung (200) mit einem Zugangspunkt, AP, verbunden ist, der ebenfalls mit der elektronischen Vorrichtung verbunden ist.

14. Senkenvorrichtung nach Anspruch 13,
wobei die Informationen über das Passwort, die in dem vierten Signal enthalten sind, unter Verwendung eines Passworts für den AP verschlüsselt sind.

15. Senkenvorrichtung nach Anspruch 8,
wobei der Prozessor (240) zu Folgendem konfiguriert ist:
Bereitstellen des Audioinhalts durch Steuern des Kommunikators (220), sodass er den entschlüsselten Audioinhalt an eine Audioausgabevorrichtung überträgt, die mit der Senkenvorrichtung (200) verbunden ist.

## Revendications

1. Dispositif électronique (100) comprenant :
un dispositif de communication (110) ;
une mémoire (120) stockant un contenu audio ; et
un processeur (130) configuré pour diffuser, au travers du dispositif de communication, un premier signal comprenant le contenu audio dans un état chiffré,
dans lequel le processeur est en outre configuré pour :
commander au dispositif de communication de transmettre un deuxième signal comprenant des informations d'identification du contenu audio à un dispositif récepteur, et
sur la base de la réception, au travers du dispositif de communication, d'un troisième signal correspondant à une saisie utilisateur liée à une demande pour le contenu audio en réponse au deuxième signal provenant du dispositif récepteur, commander au dispositif de communication de transmettre un quatrième signal comprenant des informations sur un mot de passe utilisé dans le chiffrage du contenu audio au dispositif récepteur.

2. Dispositif électronique de la revendication 1,
dans lequel le processeur (130) est configuré pour :
diffuser le premier signal à l'aide d'un protocole audio Bluetooth basse énergie, BLE, et
dans lequel le quatrième signal est transmis au dispositif récepteur à l'aide d'un procédé de communication différent du protocole audio BLE.

3. Dispositif électronique de la revendication 1,
dans lequel le processeur (130) est configuré pour :
recevoir au moins les unes de premières informations de rétroaction concernant l'intensité du premier signal et de deuxièmes informations de rétroaction concernant la qualité du premier signal provenant du dispositif récepteur au travers du dispositif de communication, et
ajuster l'intensité du premier signal diffusé sur la base d'au moins les unes des premières informations de rétroaction et des deuxièmes informations de rétroaction.

4. Dispositif électronique de la revendication 3,
dans lequel le processeur (130) est configuré pour :
commander au dispositif de communication (110) de transmettre, au dispositif récepteur, un cinquième signal destiné à identifier une distance entre le dispositif électronique (100) et le dispositif récepteur, et
sur la base de la réception, au travers du dispositif de communication, de troisièmes informations de rétroaction concernant l'intensité du cinquième signal provenant du dispositif récepteur, ajuster l'intensité du premier signal sur la base des troisièmes informations de rétroaction.

5. Dispositif électronique de la revendication 1,
dans lequel le quatrième signal est un signal ultrasonore ou un signal à bande ultra-large, UWB.

6. Dispositif électronique de la revendication 1,
dans lequel le processeur (130) est configuré pour :
sur la base du fait que le dispositif récepteur est connecté à un point d'accès, AP, qui est également connecté au dispositif électronique (100), commander au dispositif de communication (110) de transmettre le quatrième signal au dispositif récepteur, et
sur la base du fait que le dispositif récepteur n'est pas connecté à l'AP connecté au dispositif électronique, commander au dispositif de communication de transmettre des données correspondant à la non fourniture du mot de passe au dispositif récepteur.

7. Dispositif électronique de la revendication 6,
dans lequel les informations sur le mot de passe comprises dans le quatrième signal sont chiffrées à l'aide d'un mot de passe pour l'AP.

8. Dispositif récepteur (200) comprenant :
un dispositif de communication (220) ;
un dispositif d'affichage (210) ;
une mémoire (230) stockant au moins une instruction ; et
un processeur (240) configuré pour recevoir, au travers du dispositif de communication, un premier signal diffusé par un dispositif électronique et comprenant un contenu audio dans un état chiffré,
dans lequel le processeur est en outre configuré pour :
sur la base de la réception, au travers du dispositif de communication, d'un deuxième signal comprenant des informations d'identification d'un contenu audio provenant du dispositif électronique, commander au dispositif d'affichage d'afficher les informations d'identification du contenu audio,
sur la base de la réception d'une saisie utilisateur liée à une demande pour le contenu audio en réponse à l'affichage des informations d'identification du deuxième signal, commander au dispositif de communication de transmettre un troisième signal correspondant à la saisie utilisateur au dispositif électronique, et
sur la base de la réception, au travers du dispositif de communication, d'un quatrième signal comprenant des informations sur un mot de passe provenant du dispositif électronique, fournir le contenu audio en déchiffrant le contenu audio dans l'état chiffré au moyen du mot de passe.

9. Dispositif récepteur de la revendication 8,
dans lequel le premier signal est diffusé à l'aide d'un protocole audio Bluetooth basse énergie, BLE, et
dans lequel le quatrième signal est reçu en provenance du dispositif électronique à l'aide d'un procédé de communication différent du protocole audio BLE.

10. Dispositif récepteur de la revendication 8,
dans lequel le processeur (240) est configuré pour :
commander au dispositif de communication (220) de transmettre au moins les unes de premières informations de rétroaction concernant l'intensité du premier signal et de deuxièmes informations de rétroaction concernant la qualité du premier signal au dispositif électronique, et
recevoir le premier signal provenant du dispositif électronique au travers du dispositif de communication, dans lequel l'intensité du premier signal a été ajustée selon au moins les unes des premières informations de rétroaction et des deuxièmes informations de rétroaction.

11. Dispositif récepteur de la revendication 10,
dans lequel le processeur (240) est configuré pour :
recevoir, en provenance du dispositif électronique au travers du dispositif de communication (220), un cinquième signal destiné à identifier une distance entre le dispositif récepteur (200) et le dispositif électronique,
commander au dispositif de communication de transmettre de troisièmes informations de rétroaction concernant l'intensité du cinquième signal au dispositif électronique, et
recevoir le premier signal provenant du dispositif électronique au travers du dispositif de communication, dans lequel l'intensité du premier signal a été ajustée selon les troisièmes informations de rétroaction.

12. Dispositif récepteur de la revendication 8,
dans lequel le quatrième signal est un signal ultrasonore ou un signal à bande ultra-large, UWB.

13. Dispositif récepteur de la revendication 8, dans lequel le dispositif récepteur (200) est connecté à un point d'accès, AP, qui est également connecté au dispositif électronique.

14. Dispositif récepteur de la revendication 13,
dans lequel les informations sur le mot de passe comprises dans le quatrième signal sont chiffrées à l'aide d'un mot de passe pour l'AP.

15. Dispositif récepteur de la revendication 8,
dans lequel le processeur (240) est configuré pour :
fournir le contenu audio en commandant au dispositif de communication (220) de transmettre le contenu audio déchiffré à un dispositif de sortie audio connecté au dispositif récepteur (200).
